# EUROPEAN PATENT APPLICATION

(11) **EP 4 542 378 A1**
(43) Date of publication of application: **23.04.2025**
(21) Application number: 22946913.5
(22) Date of filing: 17.06.2022
(51) Int. Cl.: G06F 9/38

(54) **ACCELERATOR OFFLOAD DEVICE, ACCELERATOR OFFLOAD METHOD, AND PROGRAM**

(71) Applicant: NIPPON TELEGRAPH AND TELEPHONE CORPORATION, Chiyoda-ku, Tokyo 100-8116 (JP)
(72) Inventor: NATORI, Ko, Musashino-shi, Tokyo 180-8585 (JP); FUJIMOTO, Kei, Musashino-shi, Tokyo 180-8585 (JP); OTANI, Ikuo, Musashino-shi, Tokyo 180-8585 (JP); SAITO, Shogo, Musashino-shi, Tokyo 180-8585 (JP)
(74) Representative: Dehns
(86) International application number: PCT/JP2022/024420
(87) International publication number: WO 2023/243098

(57) **Abstract**

An accelerator offload device (100) includes: a data processing amount acquisition part (110) that acquires a data processing amount that is a data processing amount at the current time of offload target processing being performed and/or a predicted data processing amount; an operation destination determination part (120) that determines whether to perform an operation by a CPU (11) or offload the operation to an ACC (12) based on the data processing amount of an APL (1), and when a change is necessary, changes an offload destination of an operation processing offload part (130); and an operation processing offload part (130) that receives a request of operation processing from the APL (1), stores data to be processed and a processing instruction in a shared memory, and causes the CPU (11) or the ACC (12) to execute pertinent processing.

## Description

### Technical Field

The present invention relates to an accelerator offload device, an accelerator offload method, and a program.

### Background Art

Workloads that processors are good at (have high processing capability for) are different depending on the types of processors. Central processing units (CPUs) have high versatility, but are not good at (have low processing capability for) operating a workload having a high degree of parallelism, whereas accelerators (hereinafter, referred to as ACCs as appropriate), such as a field programmable gate array (FPGA)/(hereinafter, "/" means "or") a graphics processing unit (GPU)/an application specific integrated circuit (ASIC), can operate the workload at high speed with high efficiency. Offload techniques, which improve overall operation time and operation efficiency by combining those different types of processors and offloading a workload that CPUs are not good at to ACCs to operate the workload, have been increasingly utilized.

Representative examples of a specific workload subjected to ACC offloading include encoding/decoding processing (forward error correction processing (FEC)) in a virtual radio access network (vRAN), audio and video media processing, and encryption/decryption processing.

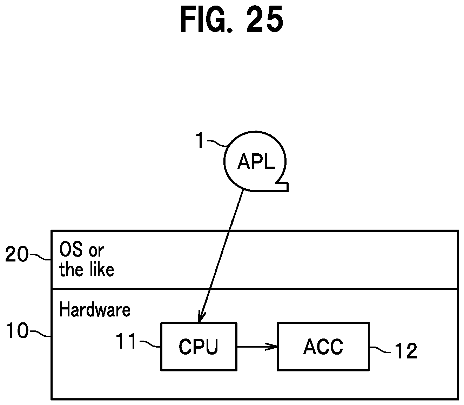

FIG. 25 is a schematic diagram illustrating processing of offloading part of the processing to be operated by a CPU to an accelerator (ACC).

As illustrated in FIG. 25, an accelerator system includes hardware (HW) 10, an operating system (OS) or the like 20, and an application (APL) 1.

Hardware 10 includes a CPU 11 and an accelerator (ACC) 12.

ACC 12 is computing unit hardware that performs specific operation at high speed based on an input from CPU 11. Specifically, accelerator 12 is a GPU or a programmable logic device (PLD) such as an FPGA.

CPU 11 offloads part of processing of APL 1 (workload that CPU 11 is not good at) to ACC 12, thereby achieving performance and power efficiency that cannot be achieved only by software (CPU processing).

Patent Literature 1 describes a control device including a communication part that receives a packet from a network, a plurality of first control parts that functions as a plurality of virtual control parts, a distribution circuit that distributes the received packet into a plurality of pieces, and a plurality of second control parts that distributes the packets distributed by the distribution circuit to the plurality of virtual control parts.

Non Patent Literature 1 describes CUDA Toolkit (registered trademark) that is a development environment for creating a high-performance GPU acceleration application. CUDA Toolkit can be used to develop, optimize, and deploy applications on GPU-accelerated embedded systems, desktop workstations, enterprise data centers, cloud-based platforms, and HPC supercomputers.

### Citation List

### Patent Literature

Patent Literature 1: JP 2019-153019 A

### Non Patent Literature

Non Patent Literature 1: CUDA, [online], [searched on May 11, 2022], the Internet <https://developer.nvidia.com/cuda-toolkit>

### SUMMARY OF THE INVENTION

### Technical Problem

When processing including an operation with a high degree of parallelism or an operation with a high load is performed, there are two possible methods in existing techniques:
(1) a method in which the operation is performed by the CPU alone; and (2) a method in which part of the processing is offloaded to ACC 12.
   (1) Regarding the method in which the operation is performed by the CPU alone, as the entire processing is performed by the CPU alone, it is not necessary to use ACC 12, and power consumption of the entire system can be reduced. Meanwhile, when the data processing amount is large, processing for which the processing efficiency of CPU 11 is poor becomes a bottleneck leading to a limited processing performance.
   (2) Regarding the method of offloading part of the processing to ACC 12, ACC 12 performs the processing for which the processing efficiency of CPU 11 is poor, thereby eliminating the bottleneck and improving the performance. While at the same time, there is power consumption overhead because ACC 12 is always operating regardless of the data processing amount.

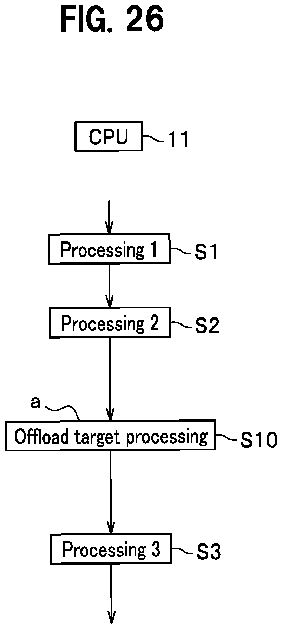

FIG. 26 is an explanatory diagram for describing the problem of (1) the method of performing an operation by the CPU alone.

As illustrated in FIG. 26, CPU 11 performs the operation of processing 1 in step S1, processing 2 in step S2, offload target processing in step S10, and processing 3 in step S3 by the CPU alone without using the ACC. As CPU 11 does not use the ACC, the power consumption overhead in the ACC does not occur. However, as the offload target processing that CPU 11 is not good at is performed by the CPU alone, a performance bottleneck occurs when the data processing amount is large (see reference sign a in FIG. 26).

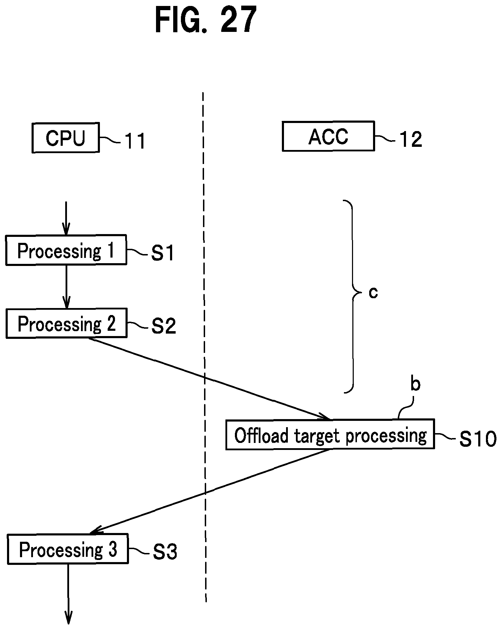

FIG. 27 is an explanatory diagram illustrating the problem of (2) the method of offloading part of processing to ACC 12.

As illustrated in FIG. 27, CPU 11 offloads the offload target processing (step S10) to ACC 12 after the processing 1 in step S1 and the processing 2 in step S2. CPU 11 receives the processing result of ACC 12 and performs the operation of the processing 3 of step S3.

The performance bottleneck of CPU 11 can be solved by the high-speed processing by ACC 12 (see reference sign b in FIG. 27). However, ACC 12 always operates and thus the power consumption overhead occurs even when there is no data processing or when the processing amount is small (see reference sign c in FIG. 27).

Thus, the challenge is to minimize the power consumption overhead while mitigating the performance bottleneck caused by the CPU in processing including a high load operation.

The present invention has been made in view of such background, and an object of the present invention is to minimize the power consumption overhead while mitigating the performance bottleneck caused by a CPU without modifying an application program.

### Solution to Problem

To solve the above-described problem, there is provided an accelerator offload device that offloads specific processing of an application program to an accelerator, the accelerator offload device including: a data processing amount acquisition part that acquires a data processing amount, the data processing amount being a data processing amount at a current time of offload target processing being performed and/or a predicted data processing amount; an operation destination determination part that determines whether to perform an operation by a CPU or offload the operation to the accelerator based on the data processing amount acquired by the data processing amount acquisition part and when a change is necessary, changes an offload destination; and an operation processing offload part that has a shared memory shared with the CPU that executes a parallel operation or with the accelerator, receives a request for operation processing from the application program, and stores data to be processed and a processing instruction in the shared memory to cause the CPU or the accelerator to execute pertinent processing.

### Advantageous Effects of Invention

According to the present invention, it is possible to minimize the power consumption overhead while mitigating the performance bottleneck caused by a CPU without modifying an application program.

### BRIEF DESCRIPTION OF DRAWINGS

[FIG. 1] FIG. 1 is a schematic configuration diagram of an accelerator offload system according to a first embodiment of the present invention.
[FIG. 2] FIG. 2 is an explanatory diagram for describing features and an operation image of an accelerator offload device according to the first embodiment of the present invention.
[FIG. 3] FIG. 3 is an operation explanatory diagram for describing dynamic switching between an ACC and a CPU of the accelerator offload device according to the first embodiment of the present invention.
[FIG. 4] FIG. 4 is a flowchart illustrating a data processing operation, while an APL is in operation, of the accelerator offload device according to the first embodiment of the present invention.
[FIG. 5] FIG. 5 is an operation explanatory diagram of the accelerator offload system until a data processing amount acquisition part of the accelerator offload device according to the first embodiment of the present invention acquires a processing amount and passes the processing amount to an operation destination determination part.
[FIG. 6] FIG. 6 is a flowchart illustrating an operation until the data processing amount acquisition part of the accelerator offload device according to the first embodiment of the present invention acquires a processing amount and passes the processing amount to the operation destination determination part.
[FIG. 7] FIG. 7 is an operation explanatory diagram of the accelerator offload device according to the first embodiment of the present invention until switching an offload target processing execution site (ACC → CPU).
[FIG. 8] FIG. 8 is a flowchart of the accelerator offload device according to the first embodiment of the present invention until switching the offload target processing execution site (ACC → CPU).
[FIG. 9] FIG. 9 is an operation explanatory diagram of the accelerator offload device according to the first embodiment of the present invention until switching the offload target processing execution site (CPU → ACC).
[FIG. 10] FIG. 10 is a flowchart of the accelerator offload device according to the first embodiment of the present invention until switching the offload target processing execution site (CPU → ACC).
[FIG. 11] FIG. 11 is a schematic configuration diagram of an accelerator offload system according to a second embodiment of the present invention.
[FIG. 12] FIG. 12 is an operation explanatory diagram illustrating until a data processing amount acquisition part of an accelerator offload device according to the second embodiment of the present invention acquires information and passes the information to an operation destination determination part.
[FIG. 13] FIG. 13 is a flowchart illustrating an operation until the data processing amount acquisition part of the accelerator offload device according to the second embodiment of the present invention acquires information and passes the information to an operation destination determination part 120.
[FIG. 14] FIG. 14 is an operation explanatory diagram of the accelerator offload device according to the second embodiment of the present invention until switching an offload target processing execution site (ACC → CPU).
[FIG. 15] FIG. 15 is a flowchart of the accelerator offload device according to the second embodiment of the present invention until switching the offload target processing execution site (ACC → CPU).
[FIG. 16] FIG. 16 is an operation explanatory diagram of the accelerator offload device according to the second embodiment of the present invention until switching the offload target processing execution site (CPU → ACC).
[FIG. 17] FIG. 17 is a flowchart of the accelerator offload device according to the second embodiment of the present invention until switching the offload target processing execution site (CPU → ACC).
[FIG. 18] FIG. 18 is a schematic configuration diagram of an accelerator offload system according to a third embodiment of the present invention.
[FIG. 19] FIG. 19 is an operation explanatory diagram illustrating a change in the number of execution processing cores (during execution of offload target processing by a CPU) of an accelerator offload device according to the third embodiment of the present invention.
[FIG. 20] FIG. 20 is an operation explanatory diagram of the accelerator offload device according to the third embodiment of the present invention until switching an offload target processing execution site (CPU → ACC).
[FIG. 21] FIG. 21 is a flowchart of the accelerator offload device according to the third embodiment of the present invention until switching the offload target processing execution site (CPU → ACC).
[FIG. 22] FIG. 22 is an operation explanatory diagram of the accelerator offload device according to the third embodiment of the present invention until switching the offload target processing execution site (ACC → CPU).
[FIG. 23] FIG. 23 is a flowchart of the accelerator offload device according to the third embodiment of the present invention <until switching the offload target processing execution site (ACC → CPU)>.
[FIG. 24] FIG. 24 is a hardware configuration diagram illustrating an example of a computer that implements the function of the accelerator offload device of the accelerator offload systems according to the embodiments of the present invention.
[FIG. 25] FIG. 25 is a schematic diagram illustrating processing of offloading part of the processing operated by a CPU to an accelerator (ACC).
[FIG. 26] FIG. 26 is an explanatory diagram for describing a problem of a method of performing an operation by a CPU alone.
[FIG. 27] FIG. 27 is an explanatory diagram for describing a problem of a method of offloading part of processing to an ACC.

### MODES FOR CARRYING OUT THE INVENTION

Hereinafter, an accelerator offload system and the like in a mode for carrying out the present invention (hereinafter, referred to as "present embodiment") will be described with reference to the drawings.

### (First Embodiment)

### [Overall Configuration]

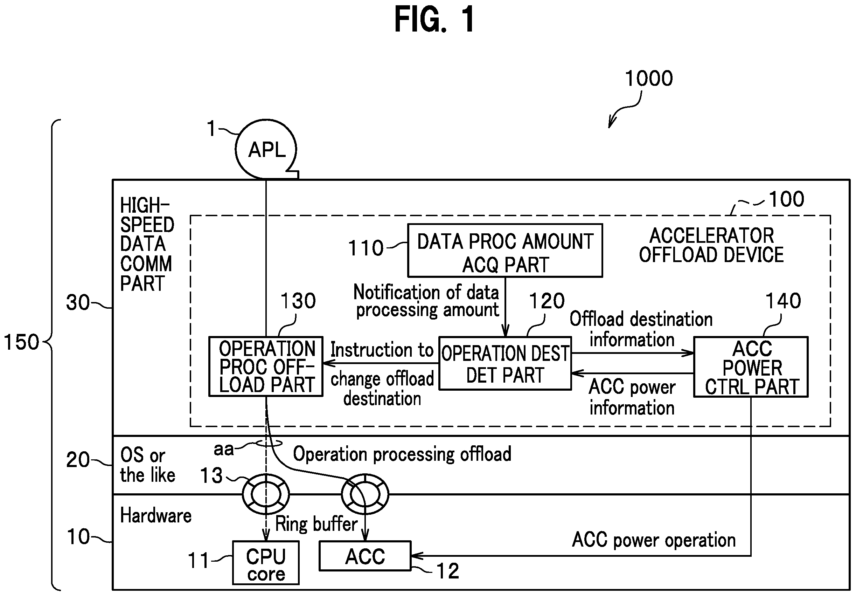

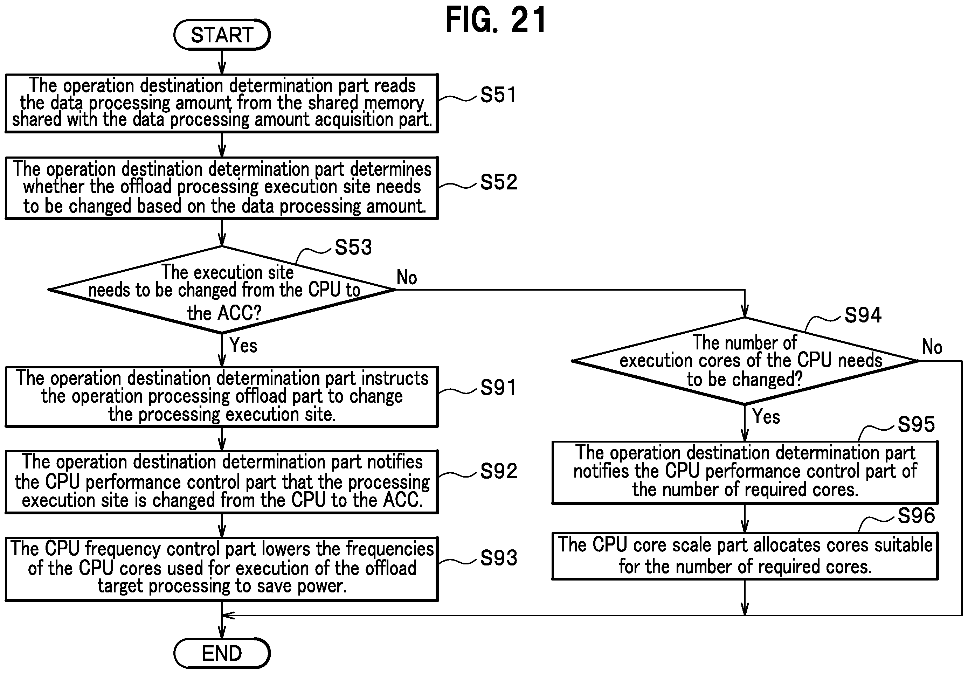

FIG. 1 is a schematic configuration diagram of an accelerator offload system according to a first embodiment of the present invention. The same components as those in FIG. 21 are denoted by the same reference signs.

As illustrated in FIG. 1, an accelerator offload system 1000 includes hardware (HW) 10, an OS or the like 20, a high-speed data communication part 30 that is high-speed data transfer middleware, an accelerator offload device 100, and an APL 1.

Hardware 10 includes a CPU 11, an accelerator (ACC) 12, and ring buffers 13.

ACC 12 is computing unit hardware that performs specific operation at high speed based on an input from CPU 11. Specifically, accelerator 12 is a GPU or a PLD such as an FPGA.

Ring buffers 13 are provided in hardware 10 to copy workloads to be processed. An operation processing offload part 130 (described below) of accelerator offload device 100 exchanges data with the accelerator via a ring buffer 13.

### [High-Speed Data Communication Part 30]

High-speed data communication part 30 is a high-speed data communication layer configured with CUDA, OpenCL BBDEV API, and the like. For example, high-speed data communication part 30 is CUDA Toolkit (registered trademark) for using a GPU manufactured by NVIDIA (registered trademark) or OpenCL (registered trademark) for operations using a heterogeneous processor. In addition, BBDEV API (registered trademark) provides an accelerator I/O function for processing wireless access signals as a development kit (library).

High-speed data communication part 30 incorporates the accelerator I/O function provided as libraries by above CUDA, OpenCL, BBDEV API, or the like into APL 1, thereby allowing APL 1 to have the accelerator I/O function for processing wireless access signals.

### [Accelerator Offload Device 100]

The accelerator offload device 100 includes a data processing amount acquisition part 110, an operation destination determination part 120, an operation processing offload part 130, and an ACC power control part 140.

The accelerator offload device 100 has the following features:
a parallel operation processing execution part (collectively referred to as processing parts that perform an operation in either the CPU or the ACC) is dynamically switched between ACC 12 and CPU 11 (Feature <1>);
regarding the switching of the parallel operation processing execution part, there is no modification to APL 1 and there is no suspension of APL 1 being in execution (Feature <2>); and
when the data processing amount is small, the processing is performed by CPU 11 to reduce power consumption of ACC 12 to minimize the power overhead, and the power consumption of ACC 12 is minimized when ACC 12 is not operating (Feature <3>).

For Feature <1>, the performance bottleneck of CPU 11 is solved by high-speed processing by ACC 12.

For Feature <2>, the switching is transparent and thus no modification of APL 1 is required and suspension of APL 1 does not occur at the time of switching.

For Feature <3>, when the data processing amount is small, CPU 11 performs processing to reduce the power consumption of ACC 12, thereby minimizing the power overhead.

### <Data Processing Amount Acquisition Part 110>

As a function of Feature <1>, data processing amount acquisition part 110 acquires a data processing amount that is a data processing amount at the current time of the offload target processing being performed and/or a predicted data processing amount, and notifies operation destination determination part 120 of the acquired data processing amount (<data processing amount notification>).

Examples of information to be acquired include (1) a parallel operation data amount [Byte] per second, and (2) a CPU use rate (when parallel operation is performed by CPU 11).

Examples of the acquisition method include (1) acquiring a processing data amount from operation processing offload part 130 and (2) acquiring the CPU use rate from an OS.

### <Operation Destination Determination Part 120>

As a function of Feature <1>, operation destination determination part 120 determines whether to perform an operation by CPU 11 or to offload the operation to ACC 12, based on the data processing amount of APL 1, and changes the offload destination of operation processing offload part 130 when the change is necessary (<offload destination change instruction>).

An example of the determination method is that an operator determines a threshold regarding the processing data amount, the CPU use rate, or a traffic amount in advance, and the processing destination is changed when the threshold is exceeded.

As a function of Feature <3>, operation destination determination part 120, when changing the processing execution destination, notifies ACC power control part 140 of that information (<offload destination information>). In addition, when changing the processing execution destination from CPU 11 to ACC 12, operation destination determination part 120 receives power information of ACC 12 (<power information>) and instructs operation processing offload part 130 on the change at timing when ACC 12 becomes able to execute processing in terms of power.

### <Operation Processing Offload Part 130>

As a function of Feature <1>, operation processing offload part 130 has a shared memory (not illustrated) shared with CPU 11 or ACC 12 that executes parallel operation, receives a request for operation processing from APL 1, stores data to be processed and processing instructions in the shared memory, and causes (see reference sign aa in FIG. 1) CPU 11 or ACC 12 to execute pertinent processing (<operation processing offloading>).

Operation processing offload part 130 receives a processing request from APL 1 through the same interface, stores the data to be processed and the processing instructions in the shared memory, and causes CPU 11 or ACC 12 to execute pertinent processing.

Operation processing offload part 130, when receiving a change from operation destination determination part 120, changes the execution site of the operation processing from ACC 12 to CPU 11 or from CPU 11 to ACC 12.

As a function of Feature <2>, operation processing offload part 130 receives a request for parallel operation processing from APL 1, and causes CPU 11 or ACC 12 to execute pertinent processing. A shared memory shared with CPU 11 or ACC 12 that executes the parallel operation is provided and the data to be processed and the processing instructions are stored in the shared memory to cause CPU 11 or ACC 12 to execute the parallel operation. In either execution destination, the processing request is received from APL 1 through the same interface and thus no modification of APL 1 nor suspension of APL 1 at the time of switching occurs.

### <ACC Power Control Part 140>

As a function of Feature <3>, ACC power control part 140, based on the offload destination information acquired from operation destination determination part 120, increases the power of ACC 12 to restore ACC 12 to a processable state or decreases the power of ACC 12 (<ACC power operation>). When the processing destination is changed from ACC 12 to CPU 11, ACC power control part 140 performs the processing of decreasing the power of ACC 12. When the processing destination is changed from CPU 11 to ACC 12, ACC power control part 140 performs the processing of increasing the power of ACC 12 to restore ACC 12 to a processable state. ACC power control part 140 provides operation destination determination part 120 with information indicating that processing has become available.

Hereinafter, a description will be given of an operation of accelerator offload device 100 of the accelerator offload system 1000 configured as described above.

### (Feature and Operation Image)

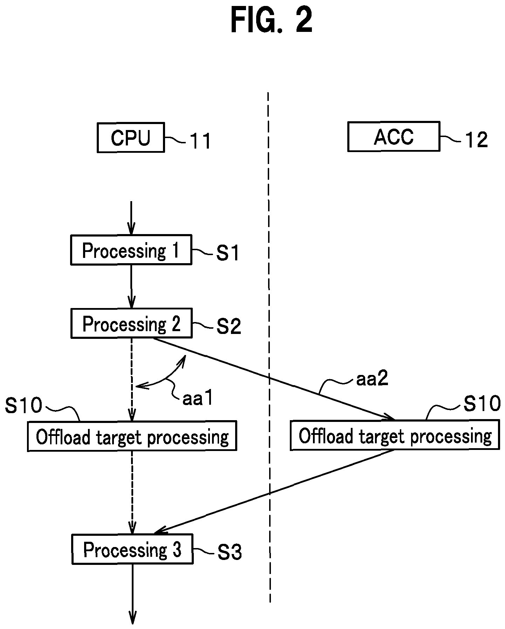

FIG. 2 is an explanatory diagram illustrating features and an operation image of accelerator offload device 100. The same processing as those in FIG. 27 are denoted by the same step numbers.

The performance bottleneck of CPU 11 is solved by the high-speed processing by ACC 12 as shown by arrow aa1 in FIG. 2 (Feature <1>).

As shown by reference sign aa2 in FIG. 2, the switching is transparent and thus no modification of APL 1 is required and suspension of APL 1 does not occur at the time of switching (Feature <2>).

As shown by reference sign aa1 in FIG. 2, when the data processing amount is small, the processing is performed by CPU 11 to reduce the power consumption of ACC 12, thereby minimizing the power overhead (Feature <3>).

### [Dynamic Switching between ACC 12 and CPU 11 (Feature <1>)]

A description will be given of dynamic switching between ACC 12 and CPU 11 (Feature <1>).

Feature <1> dynamically switches whether processing to be offloaded is to be performed by CPU 11 or ACC 12 according to the data processing amount. With this, when the data processing amount is large, the processing is offloaded to ACC 12 to eliminate the performance bottleneck of CPU 11.

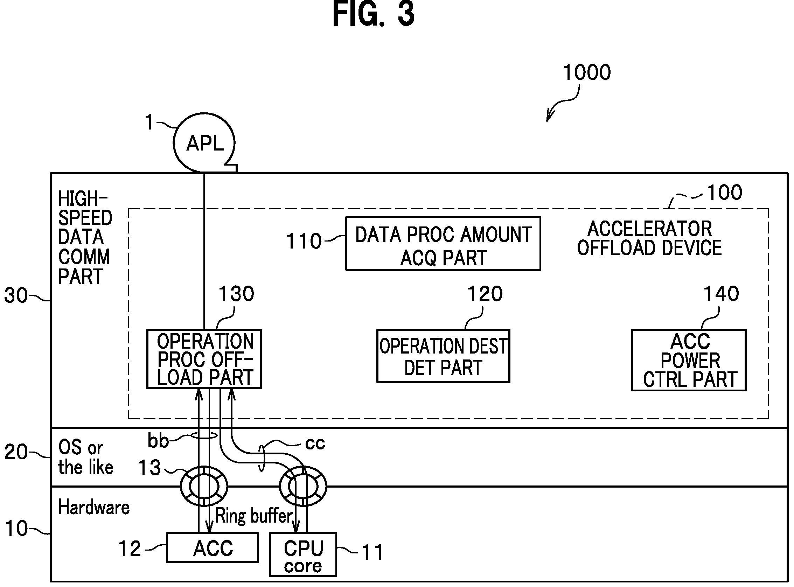

FIG. 3 is an operation explanatory diagram of the accelerator offload system for describing dynamic switching between ACC 12 and CPU 11 (Feature <1>). The same components as those in FIG. 1 are denoted by the same reference signs. The functional parts relevant to the operations described in the following description are represented by thick frames.

Operation processing offload part 130 receives a request for operation processing from APL 1, and causes CPU 11 (see reference sign cc in FIG. 3) or ACC 12 (see reference sign bb in FIG. 3) to execute pertinent processing. When a change is received from operation destination determination part 120, the execution site of the operation processing is changed from ACC 12 to CPU 11 or from CPU 11 to ACC 12.

### <Data Processing Flow While APL 1 is in Operation>

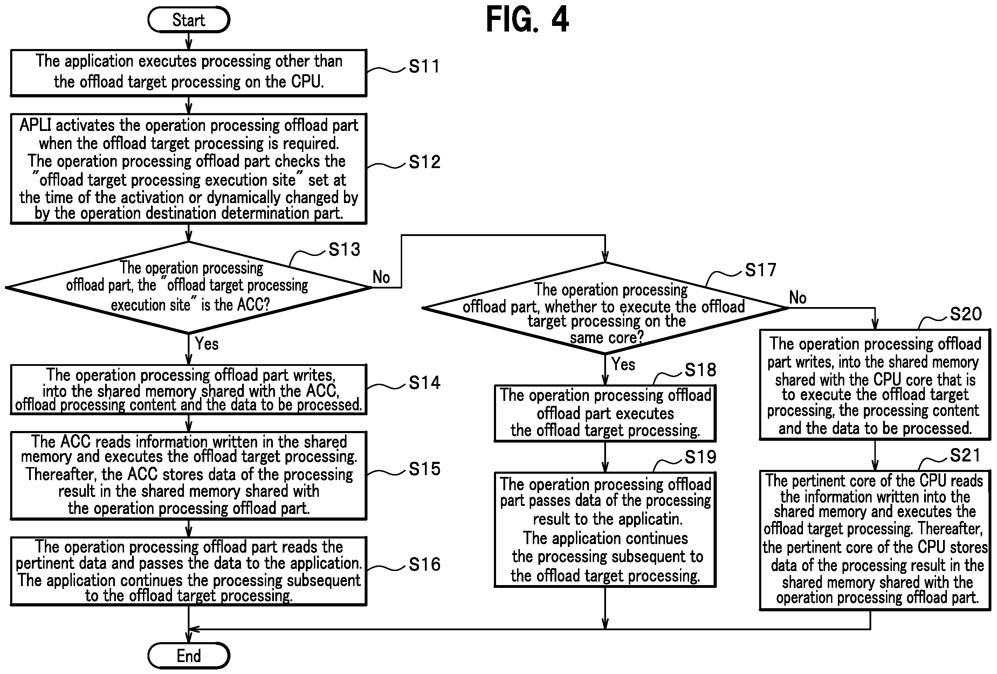

FIG. 4 is a flowchart illustrating a data processing operation while APL 1 is in operation.

The processing illustrated in FIG. 4 is continuously performed while the application is in an activated state.

In step S11, APL 1 executes processing other than the offload target processing on CPU 11.

In step S12, APL 1 activates operation processing offload part 130 when the offload target processing is required. Operation processing offload part 130 checks the "offload target processing execution site" set at the time of the activation or dynamically changed by operation destination determination part 120.

In step S13, operation processing offload part 130 determines whether the "offload target processing execution site" is ACC 12.

When the "offload target processing execution site" is ACC 12 (Yes in S13), in step S14, operation processing offload part 130 writes, into the shared memory shared with ACC 12, offload processing content and the data to be processed.

In step S15, ACC 12 reads information written in the shared memory and executes the offload target processing. Thereafter, ACC 12 stores data of the processing result in the shared memory shared with operation processing offload part 130.

In step S16, operation processing offload part 130 reads pertinent data and passes the data to the application (APL 1). The application continues the processing subsequent to the offload target processing and finishes the processing of the present flow.

When the "offload target processing execution site" is not ACC 12 in step S13 above (No in S13), in step S17, operation processing offload part 130 determines whether to execute the offload target processing on the same core.

When the offload target processing is to be executed on the same core (Yes in S17), in step S18, operation processing offload part 130 executes the offload target processing.

In step S19, operation processing offload part 130 passes data of the processing result to the application. The application continues the processing subsequent to the offload target processing and finishes the processing of the present flow.

When the offload target processing is not to be executed on the same core in step S17 (No in S17), in step S20, operation processing offload part 130 writes, into the shared memory shared with CPU 11 core that is to execute the offload target processing, the processing content and the data to be processed.

In step S19, the pertinent core of CPU 11 reads the information written into the shared memory and executes the offload target processing. Thereafter, the pertinent core of CPU 11 stores data of the processing result in the shared memory shared with operation processing offload part 130, and the processing proceeds to step S19.

### <Until Data Processing Amount Acquisition Part 110 Acquires Processing Amount and Passes Processing Amount to Operation Destination Determination Part 120>

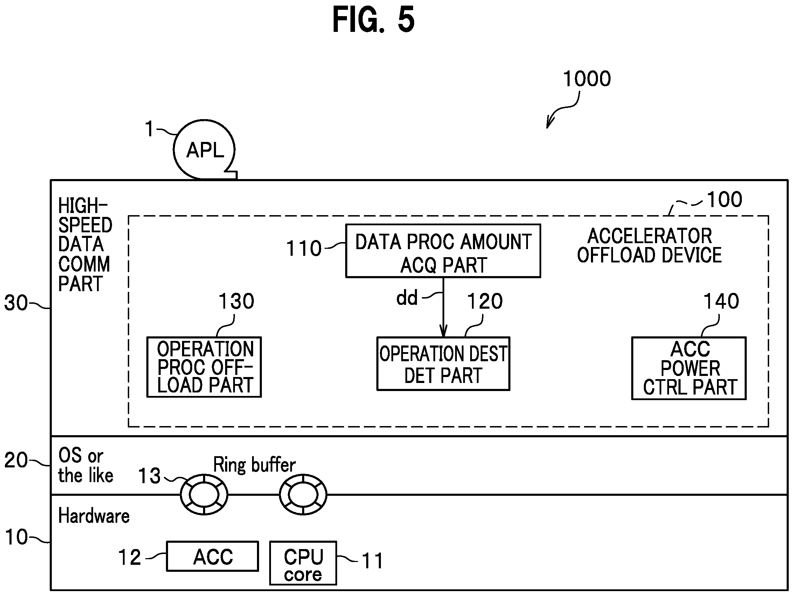

FIG. 5 is an operation explanatory diagram of the accelerator offload system until data processing amount acquisition part 110 acquires the processing amount and passes the processing amount to operation destination determination part 120. The same components as those in FIG. 1 are denoted by the same reference signs.

As illustrated in FIG. 5, data processing amount acquisition part 110 acquires (see reference sign dd in FIG. 5) the data processing amount from APL 1 or operation processing offload part 130.

First, the processing amount received by data processing amount acquisition part 110 and a method example thereof will be described.

Method example (1): Data processing amount acquisition part 110 receives the processing amount from APL 1.

The APL 1 periodically passes the processing amount to data processing amount acquisition part 110.

This is performed via the shared memory, but requires modification on the APL 1 side.

Method example (2): Data processing amount acquisition part 110 receives the processing amount from operation processing offload part 130.

Operation processing offload part 130 periodically passes the offloaded processing amount to data processing amount acquisition part 110. This passing/receiving is performed via a shared memory.

### Method example (3): A method by referencing the CPU use rate

Data processing amount acquisition part 110 receives the use rate of the pertinent core of CPU 11 that is performing the offload processing or the pertinent core of CPU 11 that is running APL 1.

This is performed by data processing amount acquisition part 110 periodically referencing the CPU use rate information held by the OS (OS or the like 20).

### Method example (4): A method by referencing the ACC 12 use rate

Data processing amount acquisition part 110 receives information on what degree ACC 12 is operating when ACC 12 is performing offload processing.

Reception of this information is by providing a shared memory between data processing amount acquisition part 110 and ACC 12 in advance and passing the information therethrough.

Next, a description will be given of a frequency at which data processing amount acquisition part 110 receives data and passes the data to operation destination determination part 120.

The frequency of receiving the data processing amount is set in advance by the operator.

For example, the CPU use rate may be referenced once every 10 µsec (in the case of the above method example (3)), and the information in the shared memory shared with operation processing offload part 130 may be read once every 20 µsec (in the case of the above method example (2)).

The read information may be immediately shared with operation destination determination part 120 or may be shared in batches. For example, the average of CPU use rates read 10 times once every 10 microseconds is shared once every 100 microseconds.

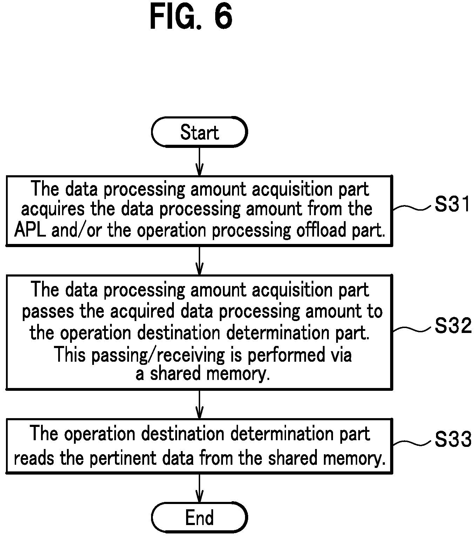

FIG. 6 is a flowchart illustrating an operation until data processing amount acquisition part 110 in FIG. 5 acquires the processing amount and passes the processing amount to operation destination determination part 120.

The processing illustrated in FIG. 6 is continuously performed while the application is in an activated state.

In step S31, data processing amount acquisition part 110 acquires the data processing amount from APL 1 and/or operation processing offload part 130.

In step S32, data processing amount acquisition part 110 passes the acquired data processing amount to operation destination determination part 120. This passing/receiving is performed via a shared memory.

In step S33, operation destination determination part 120 reads pertinent data from the shared memory and finishes the processing of the present flow.

### <Until Switching Offload Target Processing Execution Site (ACC 12 → CPU 11)>

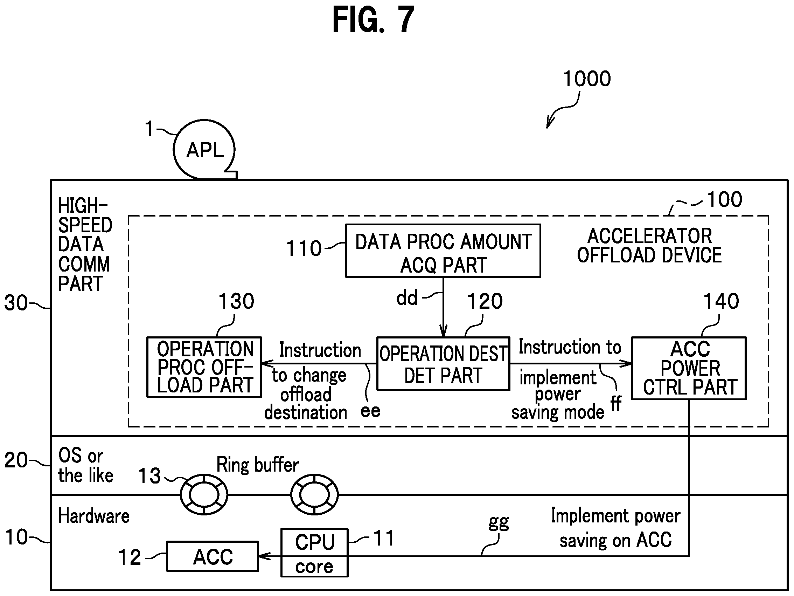

FIG. 7 is an operation explanatory diagram of the accelerator offload system until switching the offload target processing execution site (ACC 12 → CPU 11). The same components as those in FIG. 1 are denoted by the same reference signs.

As illustrated in FIG. 7, operation destination determination part 120 reads the data processing amount from a shared memory shared with data processing amount acquisition part 110 (see reference sign dd in FIG. 7). When the execution site needs to be changed from ACC 12 to CPU 11, operation destination determination part 120 issues (see reference sign ee in FIG. 7) an instruction to operation processing offload part 130 to change the execution site and issues (see reference sign ff in FIG. 7) an instruction to ACC power control part 140 to set ACC 12 to the power saving mode. ACC power control part 140 sets (see reference sign gg in FIG. 7) ACC 12 to the power saving mode.

A description will be given of the logic of determining to change the offload processing execution site until the offload target processing execution site has been switched (ACC 12 → CPU 11).

As the logic of determining to change, one that is statically specified may be used. Alternatively, statistical information such as a delay time and a throughput may be acquired from operation processing offload part 130 to dynamically change the logic.

### • Example of static specification

Triggers for changing the processing execution site from ACC 12 to CPU 11 include the following:
(1) The use rate of ACC 12 is below 50%.
(2) The processing amount offloaded by operation processing offload part 130 is below a predetermined value (for example, 1000 requests per second).

### • Example of dynamic specification

Triggers for changing the processing execution site from ACC 12 to CPU 11 include the following:
(1) When a delay requirement is sufficiently satisfied, the processing execution site is changed to CPU 11.
(1-1) The delay requirement to be satisfied by the offload target processing is received in advance from APL 1.
(1-2) Operation processing offload part 130 periodically measures the delay time required for the processing.
(1-3) The measured delay time is passed to operation destination determination part 120 via a shared memory.
(1-4) Operation destination determination part 120 compares the measured delay time T with the delay requirement R of (1-1), and when T falls within 1/2 of R, changes the processing execution site from ACC 12 to CPU 11.

Next, a description will be given of a method of changing the offload processing execution site.

Operation destination determination part 120 performs writing into the shared memory shared with operation processing offload part 130 at the offload processing execution site. For example, definition is made as [ACC 12:1, CPU 11:2] and the numerical value written into the shared memory is rewritten from 1 to 2 (1 → 2) at the change. Operation processing offload part 130, when offloading processing, checks this written value every time and performs offloading to the execution site based on the value.

Next, a description will be given of a method of setting the accelerator to the power saving mode.

ACC power control part 140 implements power savings on ACC 12 in response to an instruction from operation destination determination part 120. The power saving of ACC 12 includes the following.
Power saving example (1): Turn off the power of the accelerator
Power saving example (2): In an FPGA, rewrite into a circuit with low power consumption
Power saving example (3): Implement power savings on a connection bus with ACC 12 such as peripheral component interconnect express (PCIe)
Power saving example (4): Reduce the number of execution cores of the accelerator

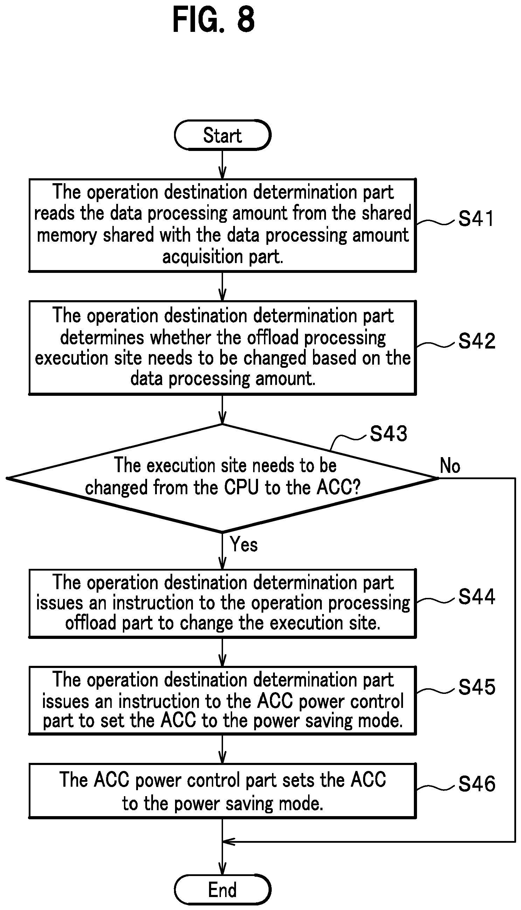

FIG. 8 is a flowchart illustrating an operation until switching the offload target processing execution site (ACC 12 → CPU 11) in FIG. 7.

The processing illustrated in FIG. 8 is continuously performed while the application is in an activated state.

In step S41, operation destination determination part 120 reads the data processing amount from the shared memory shared with data processing amount acquisition part 110.

In step S42, operation destination determination part 120 determines whether the offload processing execution site needs to be changed based on the data processing amount.

In step S43, operation destination determination part 120 determines whether the execution site needs to be changed from ACC 12 to CPU 11.

When the execution site does not need to be changed from ACC 12 to CPU 11 (No in S43), the processing of the present flow finishes.

When the execution site needs to be changed from ACC 12 to CPU 11 (Yes in S43), in step S44, operation destination determination part 120 issues an instruction to operation processing offload part 130 to change the execution site.

In step S45, operation destination determination part 120 issues an instruction to ACC power control part 140 to set ACC 12 to the power saving mode.

In step S46, ACC power control part 140 sets ACC 12 to the power saving mode and finishes the processing of the present flow.

### <Until Switching Offload Target Processing Execution Site (CPU 11 → ACC 12)>

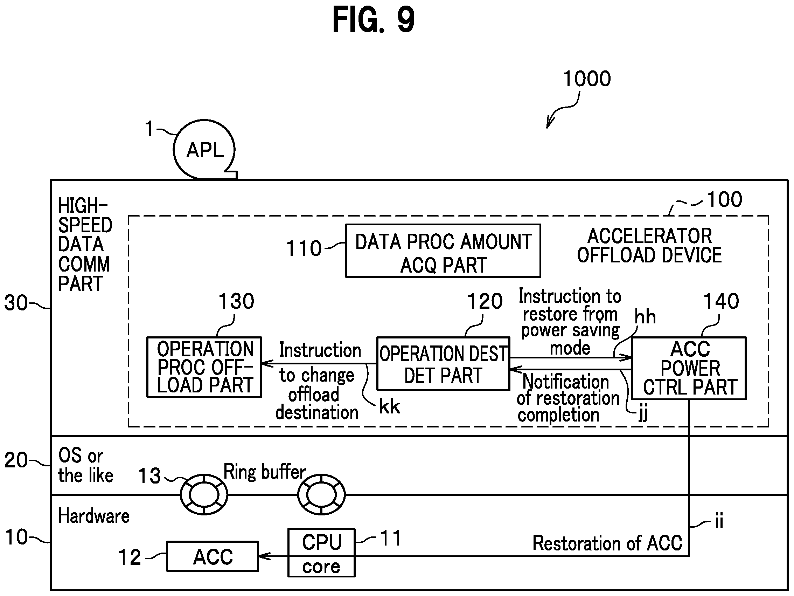

FIG. 9 is an operation explanatory diagram of the accelerator offload system until switching the offload target processing execution site (CPU 11 → ACC 12). The same components as those in FIG. 1 are denoted by the same reference signs.

As illustrated in FIG. 9, operation destination determination part 120 instructs (see reference sign hh in FIG. 9) ACC power control part 140 to restore ACC 12 from the power saving mode. ACC power control part 140 restores (see reference sign ii in FIG. 9) ACC 12 from the power saving mode and notifies (see reference sign jj in FIG. 9) operation destination determination part 120 that the restoration has been completed. Operation destination determination part 120 instructs (see reference sign kk in FIG. 9) operation processing offload part 130 to change the processing execution site.

A description will be given of a logic of determining to change the offload processing execution site until the offload target processing execution site has been switched (CPU 11 → ACC 12).

As the logic of determining to change, one that is statically specified may be used. Alternatively, statistical information such as a delay time and a throughput may be acquired from operation processing offload part 130 to dynamically change the logic.

### • Example of static specification

Triggers for changing the processing execution site from CPU 11 to ACC 12 include the following:
(1) The CPU use rate used for the offload processing exceeds a predetermined value (for example, 80%).
(2) The processing amount offloaded by operation processing offload part 130 is below a predetermined value (for example, 1000 requests per second).

### • Example of dynamic specification

Triggers for changing the processing execution site from CPU 11 to ACC 12 include the following:
(1) When a delay requirement is sufficiently satisfied, the processing execution site is changed to CPU 11.
(1-1) The delay requirement to be satisfied by the offload target processing is received in advance from APL 1.
(1-2) Operation processing offload part 130 periodically measures the delay time required for the processing.
(1-3) The measured delay time is passed to operation destination determination part 120 via a shared memory.
(1-4) Operation destination determination part 120 compares the measured delay time T with the delay requirement R of (1-1), and when T exceeds R, changes the processing execution site from CPU 11 to ACC 12.

Next, a description will be given of a method of restoring the accelerator from the power saving mode.

ACC power control part 140 restores ACC 12 to an active state in response to an instruction from operation destination determination part 120. The restoration of ACC 12 includes the following.

Restoration example (1): The accelerator is powered on.

Restoration example (2): A circuit that executes the offload target processing is written into an FPGA.

Restoration example (3): Power saving of the connection bus, such as PCIe, connected with ACC 12 is cancelled.

Restoration example (4): The number of execution cores of the accelerator is increased.

Next, a description will be given of the reason why the order in which operation destination determination part 120 issues instructions is different between the change of CPU 11 → ACC 12 and the change of ACC 12 → CPU 11.

When power saving of ACC 12 is implemented, the processing by ACC 12 becomes unable to be performed. Therefore, when changing the execution site from ACC 12 → CPU 11, the processing execution site is switched first and then the power saving of ACC 12 is performed, and when changing the execution site from CPU 11 → ACC 12, ACC 12 is restored first and then the processing execution site is changed.

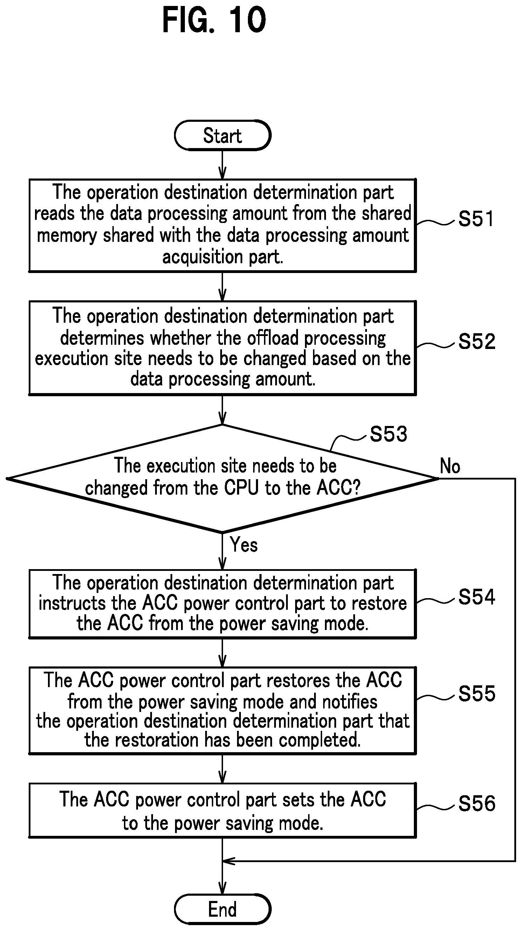

FIG. 10 is a flowchart illustrating an operation until switching the offload target processing execution site (CPU 11 → ACC 12) in FIG. 9.

The processing illustrated in FIG. 10 is continuously performed while the application is in an activated state.

In step S51, operation destination determination part 120 reads the data processing amount from the shared memory shared with data processing amount acquisition part 110.

In step S52, operation destination determination part 120 determines whether the offload processing execution site needs to be changed based on the data processing amount.

In step S53, operation destination determination part 120 determines whether the execution site needs to be changed from CPU 11 to ACC 12.

When the execution site does not need to be changed from CPU 11 to ACC 12 (No in S53), the processing of the present flow finishes.

When the execution site needs to be changed from CPU 11 to ACC 12 (S53: Yes), in step S54, destination determination part 120 instructs ACC power control part 140 to restore ACC 12 from the power saving mode.

In step S55, ACC power control part 140 restores ACC 12 from the power saving mode and notifies operation destination determination part 120 that the restoration has been completed.

In step S56, operation destination determination part 120 instructs operation processing offload part 130 to change the processing execution site and finishes the processing of the present flow.

### (Second Embodiment)

### [Overall Configuration]

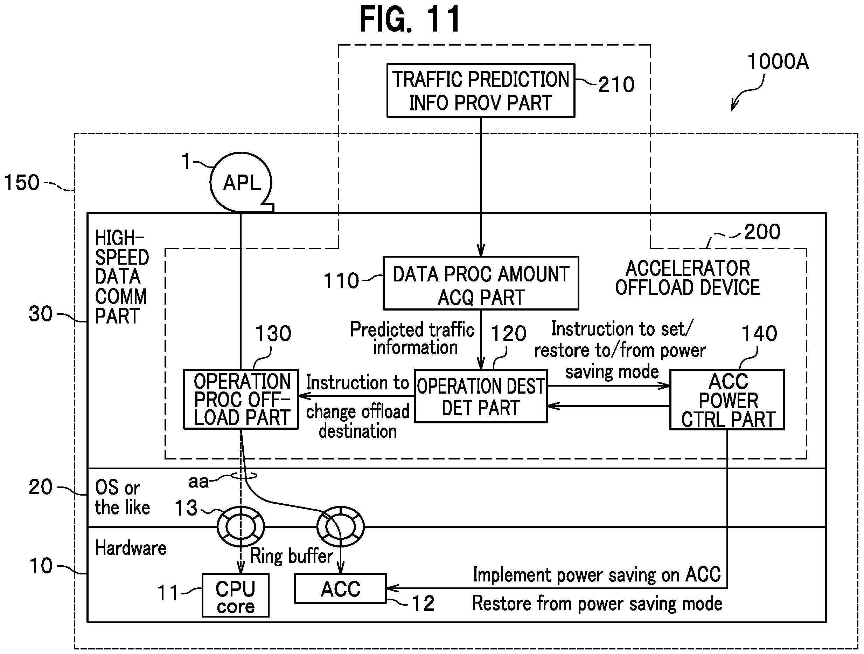

FIG. 11 is a schematic configuration diagram of an accelerator offload system according to a second embodiment of the present invention. The same components as those in FIG. 1 are denoted by the same reference signs, and the description of duplicating portions is omitted.

As illustrated in FIG. 11, an accelerator offload system 1000A includes hardware (HW) 10, an OS or the like 20, a high-speed data communication part 30, a traffic prediction information provisioning part 210 provided outside a server 150, an accelerator offload device 200, and an APL 1.

In accelerator offload device 200, a data processing amount acquisition part 110 does not acquire a predicted data processing amount from inside server 150, but receives the predicted data processing amount from traffic prediction information provisioning part 210 outside server 150.

### [Accelerator Offload Device 200]

Accelerator offload device 200 includes traffic prediction information provisioning part 210 provided outside server 150, data processing amount acquisition part 110, an operation destination determination part 120, an operation processing offload part 130, and an ACC power control part 140.

### <Traffic Prediction Information Provisioning Part 210>

Traffic prediction information provisioning part 210 provides data processing amount acquisition part 110 with prediction information of an increase or a decrease in a traffic amount.

Traffic prediction information provisioning part 210 is composed using, for example, a RAN intelligent controller (RIC) in a virtualized distributed unit (vRAN).

Traffic prediction information provisioning part 210 provides server 150 (for example, a vDU server in the vRAN) on which accelerator offload device 200 is mounted with information (hereinafter referred to as traffic amount increase/decrease prediction information) such as prediction of the increase or decrease in the traffic amount. As an example of the traffic amount increase/decrease prediction information, there is a case where the traffic amount will become five times from 12:34 due to the occurrence of a planned event such as a firework display.

### <Data Processing Amount Acquisition Part 110>

Data processing amount acquisition part 110 receives an increase/decrease prediction of the traffic amount and time information thereof from traffic prediction information provisioning part 210. Data processing amount acquisition part 110 passes the received information to operation destination determination part 120.

Accelerator offload device 200 is mounted on a vDU server (server 150) in the vRAN. In this case, data processing amount acquisition part 110 in the vDU server receives the traffic amount increase/decrease prediction information from an RIC which is the traffic prediction information provisioning part 210. As an acquisition method example, data processing amount acquisition part 110 receives the increase/decrease prediction of the traffic amount and the time information thereof from a network interface connected to traffic prediction information provisioning part 210.

### <Operation Destination Determination Part 120>

Operation destination determination part 120 determines the execution site of offload target processing based on the "traffic amount prediction information" received from data processing amount acquisition part 110. Note that cooperation with ACC power control part 140 and operation processing offload part 130 is similar to that in the first embodiment.

Hereinafter, a description will be given of an operation of accelerator offload device 200 of the accelerator offload system 1000A configured as described above.

### <Until Data Processing Amount acquisition part 110 Acquires Information and Passes Information to Operation Destination Determination Part 120>

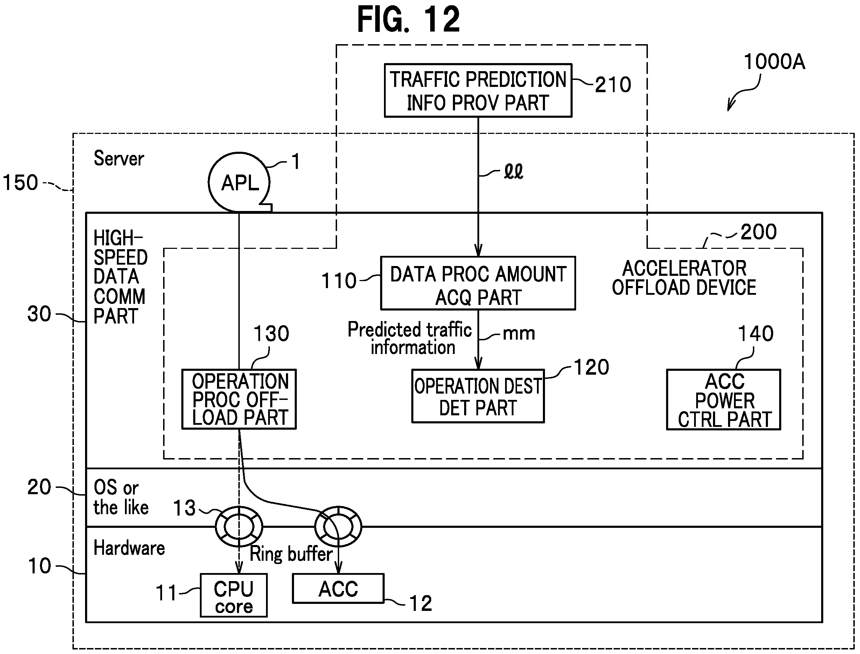

FIG. 12 is an operation explanatory diagram of the accelerator offload system until data processing amount acquisition part 110 acquires information and passes the information to operation destination determination part 120. The same components as those in FIG. 11 are denoted by the same reference signs.

As illustrated in FIG. 12, traffic prediction information provisioning part 210 transmits (see reference sign ll in FIG. 12) information such as the increase/decrease prediction of the traffic amount to data processing amount acquisition part 110. Data processing amount acquisition part 110 passes (see reference sign mm in FIG. 12) the acquired traffic prediction information to operation destination determination part 120. This passing/receiving is performed via a shared memory.

A description will be given of the processing amount received by data processing amount acquisition part 110 and a method example thereof.

Method example (1): The traffic increase/decrease information is received through a network.
- Data processing amount acquisition part 110 receives, from traffic prediction information provisioning part 210, prediction information indicating that the traffic amount will become 5 times or 6 Gbps from 12:34, for example.
- Data processing amount acquisition part 110 receives the above-described prediction information from a network interface connected with traffic prediction information provisioning part 210.

Method example (2): Information on the current traffic amount is periodically received through the network.
- Data processing amount acquisition part 110 periodically receives information on the current traffic amount from traffic prediction information provisioning part 210.
- Data processing amount acquisition part 110 receives the above-described information on the traffic amount from the network interface connected with traffic prediction information provisioning part 210.

Method example (3): Traffic increase/decrease events are received through the network
- Data processing amount acquisition part 110 receives, from traffic prediction information provisioning part 210, event information indicating that the traffic amount will significantly increase or decrease from 12:34, for example.
- Data processing amount acquisition part 110 receives the event information from the network interface connected with traffic prediction information provisioning part 210.

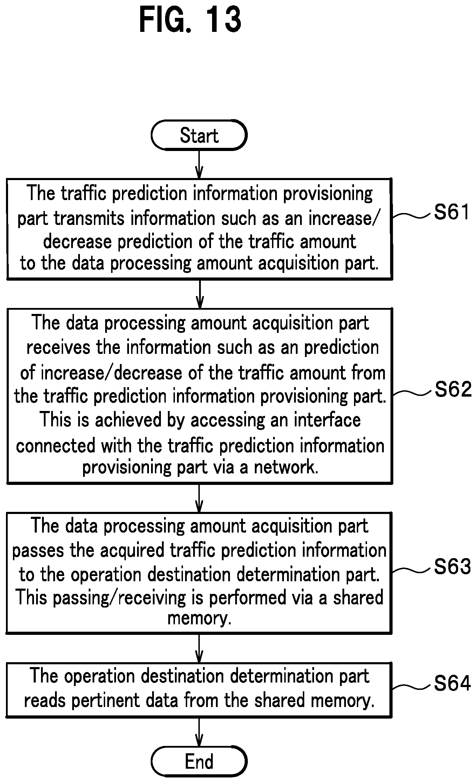

FIG. 13 is a flowchart illustrating an operation until data processing amount acquisition part 110 in FIG. 12 acquires information and passes the information to operation destination determination part 120.

In step S61, traffic prediction information provisioning part 210 transmits information such as an increase/decrease prediction of the traffic amount to data processing amount acquisition part 110.

In step S62, data processing amount acquisition part 110 receives the information such as prediction of an increase/decrease of the traffic amount from traffic prediction information provisioning part 210. This is achieved by accessing an interface connected with traffic prediction information provisioning part 210 via a network.

In step S63, data processing amount acquisition part 110 passes the acquired traffic prediction information to operation destination determination part 120. This passing/receiving is performed via a shared memory.

In step S64, operation destination determination part 120 reads the pertinent data from the shared memory and finishes the processing of the present flow.

### <Until Switching Offload Target Processing Execution Site (ACC 12 → CPU 11)>

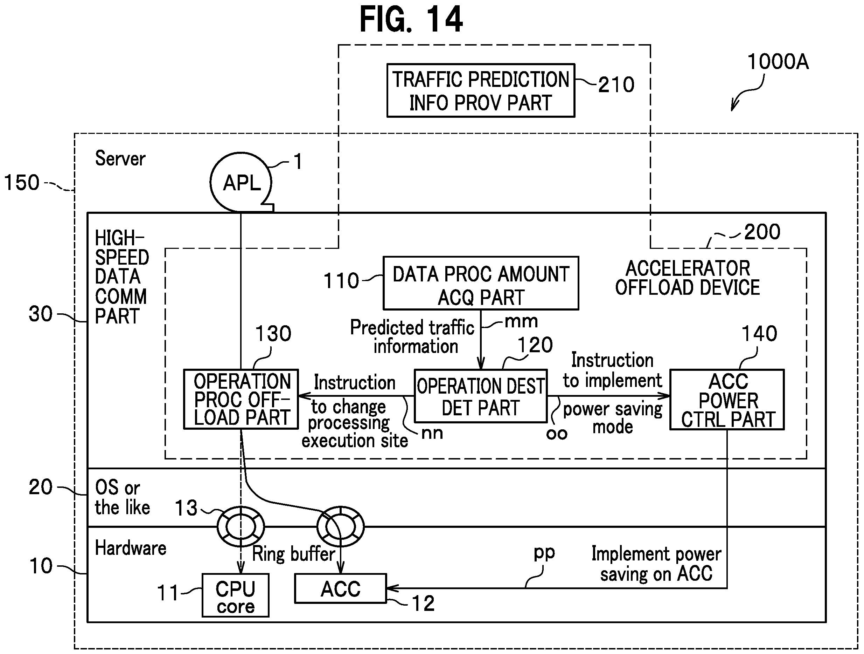

FIG. 14 is an operation explanatory diagram of the accelerator offload system until switching the offload target processing execution site (ACC 12 → CPU 11). The same components as those in FIG. 11 are denoted by the same reference signs.

As illustrated in FIG. 14, operation destination determination part 120 reads (see reference sign mm in FIG. 14) traffic prediction information from a shared memory shared with data processing amount acquisition part 110.

Operation destination determination part 120 determines whether the offload processing execution site needs to be changed based on the traffic prediction information and issues (see reference sign nn in FIG. 14) an instruction to operation processing offload part 130 to change the execution site when the execution site needs to be changed from an ACC 12 to a CPU 11. Operation destination determination part 120 issues (see reference sign oo in FIG. 14) an instruction to ACC power control part 140 to set ACC 12 to the power saving mode. ACC power control part 140 sets (see reference sign pp in FIG. 14) ACC 12 to the power saving mode.

A description will be given of a logic of determining to change the offload processing execution site.

Operation destination determination part 120 determines whether the offload processing execution site needs to be changed based on the traffic amount (traffic prediction information).

### • Example of determining to change execution site

Triggers for changing the processing execution site from ACC 12 to CPU 11 include the following:
(1) The received traffic amount per second is below 1 Gbps.
(2) Based on traffic decrease amount information, it is predicted that the traffic amount per second from a certain time will be below 1 Gbps. In this case, operation destination determination part 120 issues an instruction to change the processing execution site from ACC 12 to CPU 11 at the pertinent time.
(3) When there is information on an event of significantly decreasing traffic, operation destination determination part 120 issues an instruction to change the processing execution site from ACC 12 to CPU 11.

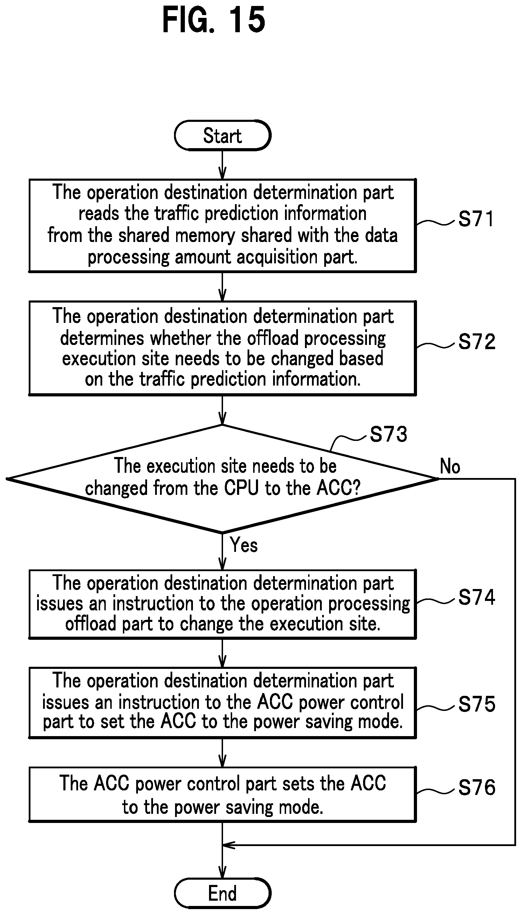

FIG. 15 is a flowchart illustrating an operation until switching the offload target processing execution site (ACC 12 → CPU 11) in FIG. 14.

This processing is continuously performed while the application is in an activated state.

In step S71, operation destination determination part 120 reads the traffic prediction information from the shared memory shared with data processing amount acquisition part 110.

In step S72, operation destination determination part 120 determines whether the offload processing execution site needs to be changed based on the traffic prediction information.

In step S73, operation destination determination part 120 determines whether the execution site needs to be changed from ACC 12 to CPU 11. When the execution site does not need to be changed from ACC 12 to CPU 11 (No in S73), the processing of the present flow finishes.

When the execution site needs to be changed from ACC 12 to CPU 11 (Yes in S73), in step S74, operation destination determination part 120 issues an instruction to operation processing offload part 130 to change the execution site.

In step S75, operation destination determination part 120 issues an instruction to ACC power control part 140 to set ACC 12 to the power saving mode.

In step S76, ACC power control part 140 sets ACC 12 to the power saving mode and finishes the processing of the present flow.

### <Until Switching Offload Target Processing Execution Site (CPU 11 → ACC 12)>

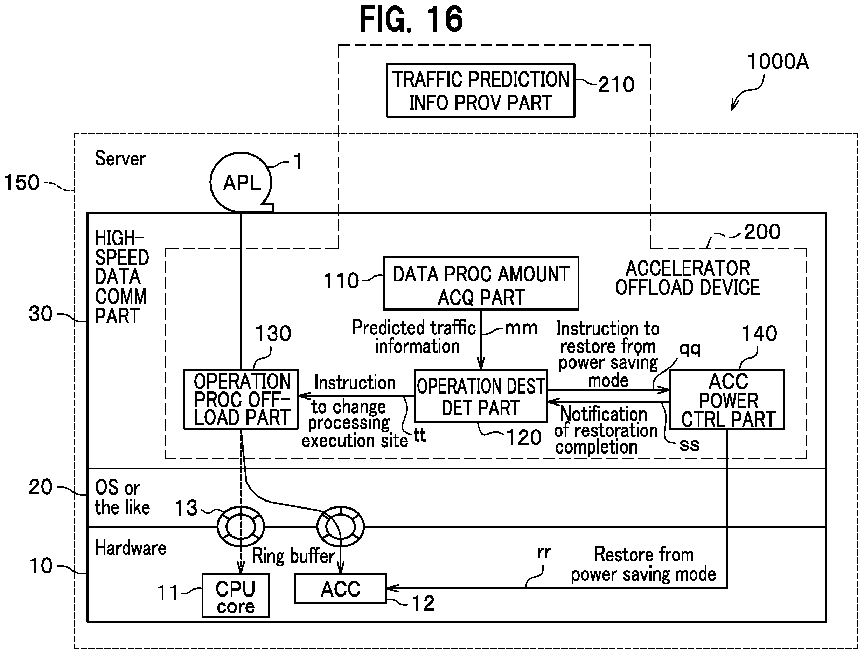

FIG. 16 is an operation explanatory diagram of the accelerator offload system until switching the offload target processing execution site (CPU 11 → ACC 12). The same components as those in FIG. 11 are denoted by the same reference signs.

As illustrated in FIG. 16, operation destination determination part 120 reads the traffic prediction information from the shared memory shared with data processing amount acquisition part 110 (see reference sign mm in FIG. 16).

Operation destination determination part 120 determines whether the offload processing execution site needs to be changed based on the traffic prediction information, and when the execution site needs to be changed from CPU 11 to ACC 12, instructs (see reference sign qq in FIG. 16) ACC power control part 140 to restore ACC 12 from the power saving mode. ACC power control part 140 restores (see reference sign rr in FIG. 16) ACC 12 from the power saving mode and notifies (see reference sign ss in FIG. 16) operation destination determination part 120 that the restoration has been completed. Operation destination determination part 120 instructs (see reference sign tt in FIG. 16) operation processing offload part 130 to change the processing execution site.

A description will be given of a logic of determining to change the offload processing execution site.

Operation destination determination part 120 determines whether the offload processing execution site needs to be changed based on the traffic amount (traffic prediction information).

### • Example of determining to change the execution site

Triggers for changing the processing execution site from CPU 11 to ACC 12 include the following:
(1) The received traffic amount per second exceeds 1 Gbps.
(2) Based on traffic increase amount information, it is predicted that the traffic amount per second from a certain time will exceed 1 Gbps. In this case, operation destination determination part 120 issues an instruction to change the processing execution site from CPU 11 to ACC 12 at the pertinent time.
(3) When there is information on an event of significantly increasing traffic, operation destination determination part 120 issues an instruction to change the processing execution site from CPU 11 to ACC 12.

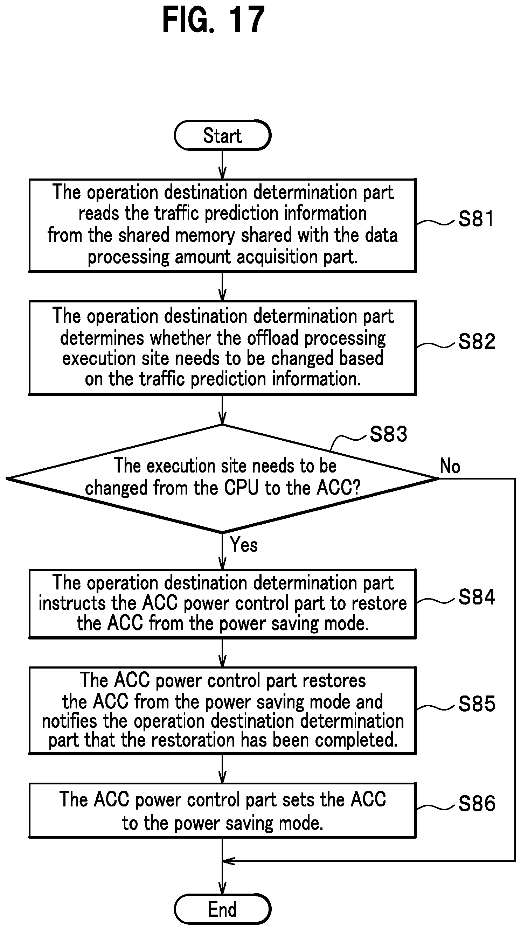

FIG. 17 is a flowchart illustrating an operation until switching the offload target processing execution site (CPU 11 → ACC 12) in FIG. 16.

This processing is continuously performed while the application is in an activated state.

In step S81, operation destination determination part 120 reads the traffic prediction information from the shared memory shared with data processing amount acquisition part 110.

In step S82, operation destination determination part 120 determines whether the offload processing execution site needs to be changed based on the traffic prediction information.

In step S83, operation destination determination part 120 determines whether the execution site needs to be changed from CPU 11 to ACC 12. When the execution site does not need to be changed from CPU 11 to ACC 12 (No in S83), the processing of the present flow finishes.

When the execution site needs to be changed from CPU 11 to ACC 12 (S83: Yes), in step S84, operation destination determination part 120 instructs ACC power control part 140 to restore ACC 12 from the power saving mode.

In step S85, ACC power control part 140 restores ACC 12 from the power saving mode and notifies operation destination determination part 120 that the restoration has been completed.

In step S86, operation destination determination part 120 instructs operation processing offload part 130 to change the processing execution site and finishes the processing of the present flow.

### (Third Embodiment)

### [Overall Configuration]

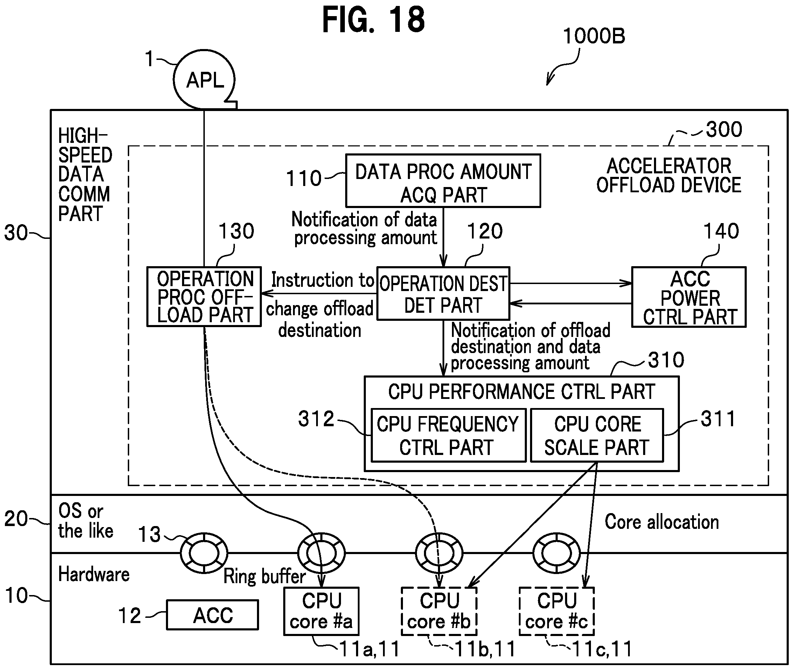

FIG. 18 is a schematic configuration diagram of an accelerator offload system according to a third embodiment of the present invention. The same components as those in FIG. 1 are denoted by the same reference signs, and the description of duplicating portions is omitted.

As illustrated in FIG. 18, an accelerator offload system 1000B includes hardware (HW) 10, an OS or the like 20, a high-speed data communication part 30, an accelerator offload device 300, and an APL 1.

CPU 11 includes a plurality of CPU cores (core #a) 11a, (core #b) 11b, (core #c) 11c, and the like.

### [Accelerator Offload Device 300]

Accelerator offload device 300 includes a data processing amount acquisition part 110, an operation destination determination part 120, an operation processing offload part 130, an ACC power control part 140, and a CPU performance control part 310.

Accelerator offload device 300 includes CPU performance control part 310, and when performing offload target processing by CPU 11, CPU performance control part 310 controls the CPU performance by scaling in or scaling out the number of processing execution cores.

Accelerator offload device 300 reduces the power consumption by performing frequency control of CPU 11 when the offload target processing is being offloaded to an ACC 12.

The CPU performance control part 310 includes a CPU core scale part 311 and a CPU frequency control part 312.

When performing the offload target processing by CPU 11, CPU core scale part 311 scales out or scales in the number of execution cores in order to satisfy performance requirements.

CPU frequency control part 312 implements power savings by lowering the CPU frequency while processing is not being performed on a CPU core, such as while the offload target processing is being performed by ACC 12. CPU frequency control part 312 restores the frequency of CPU 11 to the original frequency when starting the processing again.

Hereinbelow, description will be given of an operation of accelerator offload device 300 of accelerator offload system 1000B configured as described above.

The operation of the accelerator offload device 300 will be described classified into: an operation of changing the number of execution processing cores (during execution of the offload target processing by CPU 11), an operation until switching an offload target processing execution site (CPU 11 → ACC 12), and an operation until switching the offload target processing execution site (ACC 12 → CPU 11).

### <Change the Number of Execution Processing Cores (During Execution of Offload Target Processing by CPU 11)>

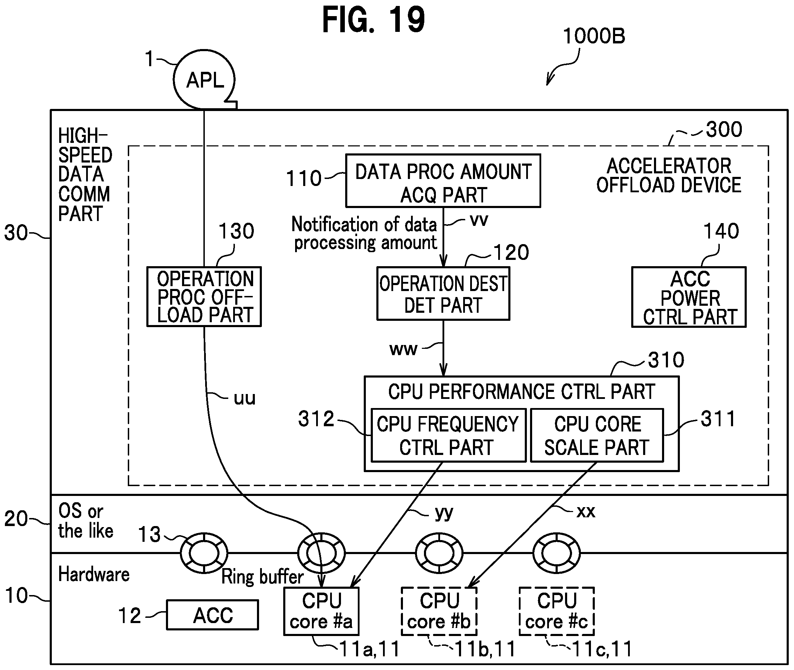

FIG. 19 is an operation explanatory diagram of the accelerator offload system when the number of execution processing cores is changed (during execution of the offload target processing by CPU 11). The same components as those in FIG. 18 are denoted by the same reference signs.

Operation processing offload part 130 is executing (see reference sign uu in FIG. 19) offload target processing on the CPU core (core #a) 11a of CPU 11.

Operation destination determination part 120 reads (see reference sign vv in FIG. 19) the data processing amount from a shared memory shared with data processing amount acquisition part 110.

Operation destination determination part 120 determines whether the offload processing execution site needs to be changed based on the data processing amount, and when the offload processing execution site is to be changed, notifies (see reference sign ww in FIG. 19) CPU performance control part 310 of the change.

When performing the offload target processing by CPU 11, CPU core scale part 311 performs (see reference sign xx in FIG. 19) core allocation of scaling out/scaling in the number of execution cores in order to satisfy the performance requirements.

CPU frequency control part 312 lowers (see reference sign yy in FIG. 19) the CPU frequency while processing is not being performed on the CPU core, such as while the offload target processing is being performed by ACC 12.

A description will be given of determination and notification of the number of cores required for the offload target processing will be described.

Operation destination determination part 120 determines according to the processing amount the number of cores to be allocated during execution of the offload target processing by CPU 11 and notifies CPU performance control part 310 of the number of cores to be allocated. The determination of the number of cores to be allocated includes the following determination examples.

Determination example (1): Increase or decrease is determined based on an average CPU 11 use rate of allocated cores.
- The average use rate is 80% or more: Increase the number of CPU 11 cores by 1; and 30% or less: Reduce the number of cores of CPU 11 by 1, for example.

Determination example (2): The required number is determined based on the number of requests per second of operation processing offload part 130.
- When the number of requests per second is
   less than 500: the number of CPU 11 cores is 1;
   500 or more and less than 750: the number of CPU 11 cores is 2, and
   750 or more and less than 1000: the number of CPU 11 cores is 3, or the like.

The operation of changing the number of execution processing cores (during execution of the offload target processing by CPU 11) in FIG. 19 corresponds to step S51, step S52, step S53, and steps S94 to S96 in the flowchart in FIG. 21 described below.

### <Until Switching Offload Target Processing Execution Site (CPU 11 → ACC 12)>

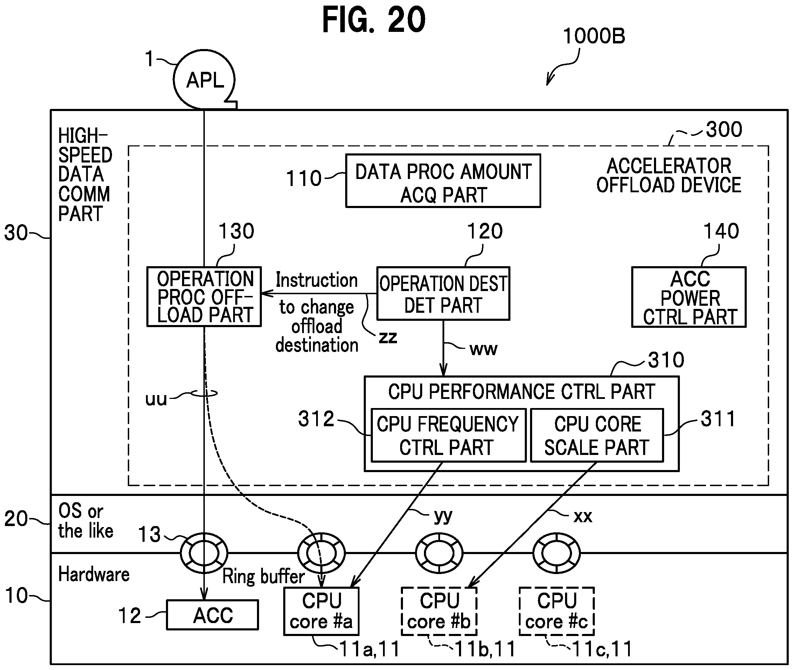

FIG. 20 is an operation explanatory diagram of the accelerator offload system until switching the offload target processing execution site (CPU 11 → ACC 12). The same components as those in FIG. 18 are denoted by the same reference signs.

As illustrated in FIG. 20, when the execution site needs to be changed from CPU 11 to ACC 12, operation destination determination part 120 instructs (see reference sign zz in FIG. 20) operation processing offload part 130 to change the processing execution site.

Operation destination determination part 120 notifies (see reference sign ww in FIG. 20) CPU performance control part 310 that the processing execution site has been changed from CPU 11 to ACC 12. Operation destination determination part 120, when the number of execution cores of CPU 11 needs to be changed, notifies CPU performance control part 310 of the number of required cores. CPU core scale part 311 allocates (see reference sign xx in FIG. 19) cores suitable for the number of required cores. CPU frequency control part 312 lowers (see reference sign yy in FIG. 19) the frequency of a CPU core used to execute the offload target processing.

A description will be given of scaling-in when the offload target processing is switched from CPU 11 to ACC 12.

When a plurality of CPU 11 cores is allocated to the offload target processing, CPU core scale part 311 scales in the cores when the processing execution site is shifted from CPU 11 to ACC 12. That is, CPU core scale part 311 releases the CPU core reserved for the offload target processing and reallocates the CPU core to application processing or the like.

FIG. 21 is a flowchart illustrating an operation until switching the offload target processing execution site (CPU 11 → ACC 12) in FIG. 20. This flow includes the operation of changing the number of execution processing cores in FIG. 19 (during execution of the offload target processing by CPU 11).

The processing illustrated in FIG. 21 is continuously performed while the application is in an activated state.

Note that the same step number is assigned to a step of performing the same processing in the flow of FIG. 10.

In step S51, operation destination determination part 120 reads the data processing amount from the shared memory shared with data processing amount acquisition part 110.

In step S52, operation destination determination part 120 determines whether the offload processing execution site needs to be changed based on the data processing amount.

In step S53, operation destination determination part 120 determines whether the execution site needs to be changed from CPU 11 to ACC 12.

When the execution site does not need to be changed from CPU 11 to ACC 12 (S53: No), the processing proceeds to step S94.

When the execution site needs to be changed from CPU 11 to ACC 12 in step S53 (S53: Yes), in step S91, operation destination determination part 120 instructs operation processing offload part 130 to change the processing execution site.

In step S92, operation destination determination part 120 notifies CPU performance control part 310 that the processing execution site is changed from CPU 11 to ACC 12.

In step S93, CPU frequency control part 312 lowers the frequency(ies) of the CPU core(s) used for execution of the offload target processing to save power and finishes the processing of the present flow.

When the execution site does not need to be changed from CPU 11 to ACC 12 in step S53 (S53: No), in step S94, operation destination determination part 120 determines whether the number of execution cores of CPU 11 needs to be changed based on the data processing amount. When the number of execution cores of CPU 11 does not need to be changed (S94: No), the processing of the present flow is finished.

When the number of execution cores of CPU 11 needs to be changed (S94: Yes), in step S95, operation destination determination part 120 notifies CPU performance control part 310 of the number of required cores.

In step S96, CPU core scale part 311 allocates cores suitable for the number of required cores and finishes the processing of the present flow.

### <Until Switching Offload Target Processing Execution Site (ACC 12 → CPU 11)>

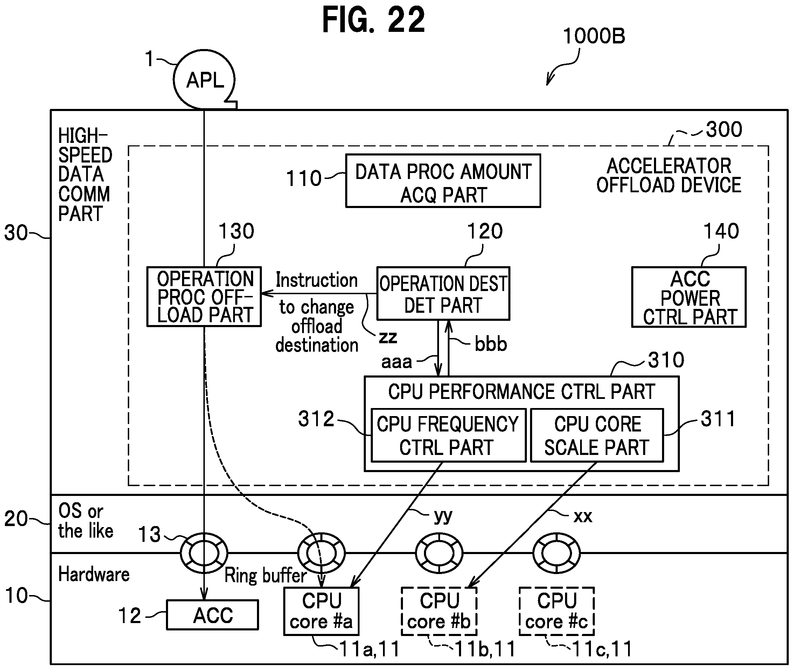

FIG. 22 is an operation explanatory diagram of the accelerator offload system until switching the offload target processing execution site (ACC 12 → CPU 11). The same components as those in FIG. 18 are denoted by the same reference signs.

As illustrated in FIG. 22, operation destination determination part 120 notifies (see reference sign aaa in FIG. 22) CPU performance control part 310 of the change of the processing execution site from ACC 12 to CPU 11 and the number of CPU 11 cores required for the offload target processing. CPU core scale part 311 allocates (see reference sign xx in FIG. 22) the communicated number of required cores for the offload target processing. CPU frequency control part 312 increases (see reference sign yy in FIG. 22) the frequencies of the allocated cores to the maximum. CPU frequency control part 312 notifies (see reference sign bbb in FIG. 22) operation destination determination part 120 of the finish of the core allocation and frequency alteration. Operation destination determination part 120 issues (see reference sign zz in FIG. 22) an instruction to operation processing offload part 130 to change the execution site.

A description will be given of notification of the number of cores required for the offload target processing.

Operation destination determination part 120, when changing the offload target processing execution site from ACC 12 to CPU 11, determines the number of cores to be allocated according to the processing amount and notifies CPU performance control part 310 of the determined number. The determination of the number of cores to be allocated includes the following determination examples.

Determination example (1): Determination is made based on the use rate of ACC 12.
- When the use rate of ACC 12 is
   less than 20%: the number of CPU cores is 1; and
   20% or more and 50% or less: the number of CPU cores is 2, or the like.

Determination example (2): Determination is made based on the number of requests per second of operation processing offload part 130.
- When the number of requests per second is
   less than 500: the number of CPU cores is 1;
   500 or more and less than 750: the number of CPU cores is 2; and
   750 or more and less than 1000: the number of CPU cores is 3, or the like.

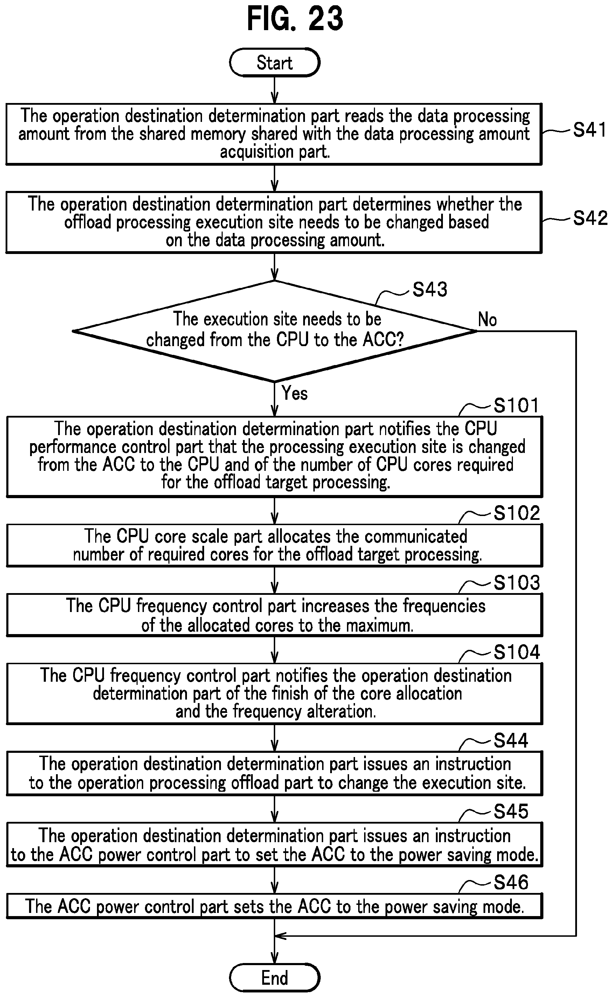

FIG. 23 is a flowchart illustrating the <operation until switching the offload target processing execution site (ACC 12 → CPU 11)> in FIG. 22.

Note that the same step number is assigned to a step of performing the same processing in the flow of FIG. 8.

In step S41, operation destination determination part 120 reads the data processing amount from the shared memory shared with data processing amount acquisition part 110.

In step S42, operation destination determination part 120 determines whether the offload processing execution site needs to be changed based on the data processing amount.

In step S43, operation destination determination part 120 determines whether the execution site needs to be changed from ACC 12 to CPU 11.

When the execution site does not need to be changed from ACC 12 to CPU 11 (No in S43), the processing of the present flow finishes.

When the execution site needs to be changed from ACC 12 to CPU 11 (Yes in S43), in step S101, operation destination determination part 120 notifies CPU performance control part 310 that the processing execution site is changed from ACC 12 to CPU 11 and of the number of CPU 11 cores necessary for the offload target processing.

In step S102, CPU core scale part 311 allocates the communicated number of required cores for the offload target processing.

In step S103, CPU frequency control part 312 increases the frequencies of the allocated cores to the maximum.

In step S104, CPU frequency control part 312 notifies operation destination determination part 120 of the finish of the core allocation and the frequency alteration.

In step S44, operation destination determination part 120 issues an instruction to operation processing offload part 130 to change the execution site.

In step S45, operation destination determination part 120 issues an instruction to ACC power control part 140 to set ACC 12 to the power saving mode.

In step S46, ACC power control part 140 sets ACC 12 to the power saving mode and finishes the processing of the present flow.

### [Hardware Configuration]

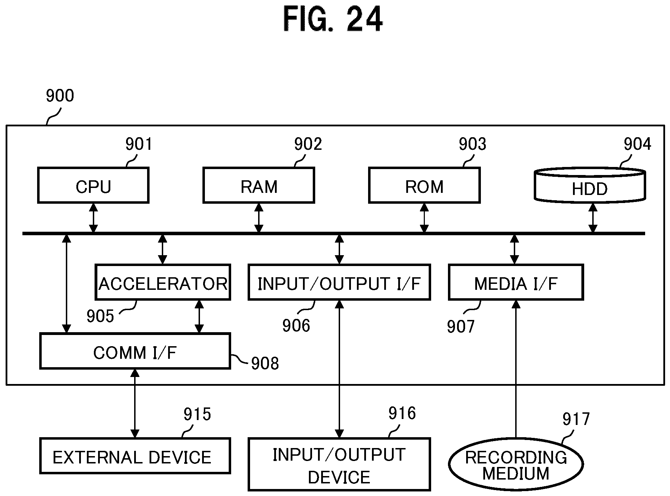

The accelerator offload devices 100, 200, and 300 according to the above-described embodiments are implemented by a computer 900 having the configuration illustrated in FIG. 24, for example.

FIG. 24 is a hardware configuration diagram illustrating an example of computer 900 that implements functions of accelerator offload devices 100, 200, and 300.

Computer 900 includes a CPU 901, a RAM 902, a ROM 903, an HDD 904, an accelerator 905, an input/output interface (I/F) 906, a media interface (I/F) 907, and a communication interface (I/F) 908. The accelerator 905 corresponds to accelerator offload device 100, 200, and 300 illustrated in FIGS. 1, 11, and 18.

Accelerator 905 is an accelerator (device) 11 (FIGS. 1 and 5) that processes at least one of data from communication I/F 908 and data from RAM 902 at high speed. Accelerator 905 may be of a type (look-aside type) that performs processing from CPU 901 or RAM 902 and then returns the execution result to CPU 901 or RAM 902. On the other hand, accelerator 905 may also be of a type (in-line type) that is interposed between communication I/F 908 and CPU 901 or RAM 902 and performs the processing.

Accelerator 905 is connected to an external device 915 via communication I/F 908. Input/output I/F 906 is connected to an input/output device 916. Media I/F 907 reads/writes data from/to a recording medium 917.

CPU 901 operates according to a program stored in ROM 903 or HDD 904 and controls each component of accelerator offload devices 100, 200, and 300 in FIGS. 1, 11, and 18 by executing the program (also referred to as an application or App as an abbreviation thereof) read into RAM 902. The program can be delivered via a communication line or delivered by being recorded in recording medium 917 such as a CD-ROM.

ROM 903 stores a boot program to be executed by CPU 901 when computer 900 is activated, a program that depends on the hardware of computer 900, and the like.

CPU 901 controls input/output device 916 including an input unit such as a mouse or a keyboard and an output unit such as a display or a printer via input/output I/F 906. CPU 901 acquires data from input/output device 916 and outputs generated data to input/output device 916 via input/output I/F 906. Note that a graphics processing unit (GPU) or the like may be used as a processor in conjunction with CPU 901.

HDD 904 stores a program to be executed by CPU 901, data to be used by the program, and the like. Communication I/F 908 receives data from another device via a communication network (e.g. network (NW)) and outputs the data to CPU 901 and also transmits data generated by CPU 901 to another device via the communication network.

Media I/F 907 reads a program or data stored in the recording medium 917 and outputs the program or data to the CPU 901 via the RAM 902. CPU 901 loads a program for the desired processing from recording medium 917 onto RAM 902 via media I/F 907 and executes the loaded program. Recording medium 917 is an optical recording medium such as a digital versatile disc (DVD) or a phase change rewritable disk (PD), a magneto-optical recording medium such as a magneto optical disk (MO), a magnetic recording medium, a conductor memory tape medium, a semiconductor memory, or the like.

For example, in a case where computer 900 functions as accelerator offload devices 100, 200, or 300 configured as a device according to the present embodiment, CPU 901 of computer 900 implements the functions of accelerator offload devices 100 or 200 by executing the program loaded onto RAM 902. HDD 904 stores data in RAM 902. CPU 901 reads the program for the desired processing from recording medium 917 and executes the program. In addition, CPU 901 may read the program for the desired processing from another device via the communication network.

### [Effects]

As described above, an accelerator offload device 100 that offloads specific processing of an application program (APL 1) to an accelerator (ACC 12) includes: a data processing amount acquisition part 110 that acquires a data processing amount, the data processing amount being a data processing amount at a current time of offload target processing being performed and/or a predicted data processing amount; an operation destination determination part 120 that determines whether to perform an operation by a CPU 11 or offload the operation to ACC 12 based on data processing amount of APL 1 and when a change is necessary, changes an offload destination of an operation processing offload part 130; and the operation processing offload part 130, which has a shared memory shared with CPU 11 that executes a parallel operation or with ACC 12, receives a request for operation processing from APL 1, and stores data to be processed and a processing instruction in the shared memory to cause CPU 11 or ACC 12 to execute pertinent processing.

With this, it is possible to minimize the power consumption overhead while mitigating the performance bottleneck caused by the CPU without modifying the application program. That is, by dynamically switching whether the processing to be offloaded is to be performed by CPU 11 or ACC 12 according to the data processing amount, when the data processing amount is large, the processing is offloaded to ACC 12 to eliminate the performance bottleneck of CPU 11 (Feature <1>). As the dynamic switching by the operation processing part is performed transparently to APL 1, no modification of APL 1 is necessary and suspension of APL 1 does not occur at the time of switching (Feature <2>). When a parallel operation is being performed by CPU 11, it is possible to minimize the power consumption overhead due to ACC 12 being mounted by reducing the power consumption of ACC 12 (Feature <3>).

In accelerator offload device 100 (FIG. 1), operation processing offload part 130 receives the processing request from APL 1 through the same interface, stores the data to be processed and the processing instruction in the shared memory to cause CPU 11 or ACC 12 to execute pertinent processing.

In this way, operation processing offload part 130 stores the data to be processed and the processing instruction in the shared memory on the hardware 10, so that the specific processing of the application program (APL 1) is able to be executed at high speed without modifying the application program regardless of whether the parallel operation processing execution part is assigned to ACC 12 or CPU 11.

In accelerator offload device 100 (FIG. 1), operation processing offload part 130, upon reception of a change from operation destination determination part 120, changes an execution site of the operation processing from ACC 12 to CPU 11 or from CPU 11 to ACC 12.

In this way, operation processing offload part 130 is able to dynamically switch the parallel operation processing execution part between ACC 12 and CPU 11. As the dynamic switching by the operation processing part is performed transparently to APL 1, modification of APL 1 is not necessary and suspension of APL 1 does not occur at the time of switching.

In accelerator offload device 100 (FIG. 1), an ACC power control part 140 performs ACC power control of lowering power of ACC 12 or raising the power of ACC 12 to restore ACC 12 to a processable state based on offload destination information acquired from operation destination determination part 120.

With this, when the parallel operation is being performed by CPU 11, operation processing offload part 130 is able to minimize the power consumption overhead due to ACC 12 being mounted by reducing the power consumption of ACC 12. In addition, when ACC 12 is not operating, it is possible to minimize the power consumption of ACC 12.

Accelerator offload device 200 (FIG. 14) further includes a traffic prediction information provisioning part 210 that provides prediction information on an increase or a decrease in the traffic amount to data processing amount acquisition part 110.

With this, operation processing offload part 130 is able to perform operation processing offloading using not only the current data processing amount but also the prediction information on the increase or decrease in the traffic amount. Furthermore, data processing amount acquisition part 110 is able to acquire the predicted data processing amount from traffic prediction information provisioning part 210 outside server 150 rather than from inside of server 150. For example, traffic prediction information provisioning part 210 may use an RIC in a vRAN and transmit the traffic amount increase/decrease prediction information to a vDU server on which the present system is mounted.

In accelerator offload device 300 (FIG. 18), the CPU includes a plurality of CPU cores, and accelerator offload device 300 further includes a CPU performance control part 310 that, when the offload target processing is to be executed by the CPU, controls the CPU performance by scaling in or scaling out a number of processing execution cores.

With this, it is possible to alter the performance by scaling in or scaling out the number of processing execution cores when the offload target processing is to be performed by CPU 11 or to reduce the power consumption by controlling the frequency of CPU 11 while the offload target processing is being offloaded to ACC 12.

Note that, in the processing described in the above embodiments, all or some pieces of the processing described as those to be automatically performed may be manually performed, or all or some pieces of the processing described as those to be manually performed may be automatically performed by a known method. Further, processing procedures, control procedures, specific name, and information including various types of data and parameters described in the specification and the drawings can be freely changed unless otherwise specified.

The constituent elements of the devices illustrated in the drawings are functionally conceptual ones and are not necessarily physically configured as illustrated in the drawings. In other words, a specific form of distribution and integration of individual devices is not limited to the illustrated form, and all or part thereof can be functionally or physically distributed and integrated in any unit according to various loads, usage conditions, and the like.

Some or all of the configurations, functions, processing parts, processing means, and the like described above may be implemented by hardware by, for example, being designed in an integrated circuit. Each of the configurations, functions, and the like may be implemented by software for interpreting and executing a program for causing a processor to implement each function. Information such as a program, table, and file for implementing each function can be held in a recording device such as a memory, hard disk, or solid state drive (SSD) or a recording medium such as an integrated circuit (IC) card, secure digital (SD) card, or optical disc.

### Reference Signs List

1 APL (application program)
10 Hardware
11 CPU
11a, 11b, 11c CPU core (core #)
12 ACC (accelerator)
13 Ring buffer
30 High-speed data communication part
100, 200, 300 Accelerator offload device
110 Data processing amount acquisition part
120 Operation destination determination part
130 Operation processing offload part
140 ACC power control part
210 Traffic prediction information provisioning part
1000 to 1000B Accelerator offload system

## Claims

1. An accelerator offload device that offloads specific processing of an application program to an accelerator, the accelerator offload device comprising:
a data processing amount acquisition part that acquires a data processing amount, the data processing amount being a data processing amount at a current time of offload target processing being performed and/or a predicted data processing amount;
an operation destination determination part that determines whether to perform an operation by a CPU or offload the operation to the accelerator based on the data processing amount acquired by the data processing amount acquisition part and when a change is necessary, changes an offload destination; and
an operation processing offload part that has a shared memory shared with the CPU that executes a parallel operation or with the accelerator, receives a request for operation processing from the application program, and stores data to be processed and a processing instruction in the shared memory to cause the CPU or the accelerator to execute pertinent processing.

2. The accelerator offload device according to claim 1,
wherein the operation processing offload part receives a processing request from the application program through a same interface, stores the data to be processed and a processing instruction in the shared memory to cause the CPU or the accelerator to execute pertinent processing.

3. The accelerator offload device according to claim 1,
wherein the operation processing offload part, upon reception of a change of an offload destination from the operation destination determination part, changes an execution site of the operation processing from the accelerator to the CPU or from the CPU to the accelerator.

4. The accelerator offload device according to claim 1, further comprising an accelerator power control part that performs accelerator power control of lowering power of the accelerator or raising the power of the accelerator to restore the accelerator to a processable state based on offload destination information acquired from the operation destination determination part.

5. The accelerator offload device according to claim 1, further comprising a traffic prediction information provisioning part that provides prediction information on an increase or a decrease in a traffic amount to the data processing amount acquisition part.

6. The accelerator offload device according to claim 1,
wherein the CPU includes a plurality of CPU cores, and
wherein the accelerator offload device further comprises:
a CPU performance control part that, when the offload target processing is to be executed by the CPU, controls CPU performance by scaling in or scaling out a number of processing execution cores.

7. An accelerator offload method of an accelerator offload device that offloads specific processing of an application program to an accelerator, wherein the accelerator offload device executes:
a step of acquiring a data processing amount, the data processing amount being a data processing amount at a current time of offload target processing being performed and/or a predicted data processing amount;
a step of determining whether to perform an operation by a CPU or offload the operation to the accelerator based on the acquired data processing amount, and when a change is necessary, changing an offload destination; and
with a shared memory shared with the CPU that executes a parallel operation or with the accelerator, a step of receiving a request for operation processing from the application program, storing data to be processed and a processing instruction in the shared memory to cause the CPU or the accelerator to execute pertinent processing.

8. A program for causing a computer to function as the accelerator offload device according to any one of claims 1 to 6.
